# NEUE EUROPÄISCHE PATENTSCHRIFT

(11) **EP 1 743 759 B2**
(45) Veröffentlichungstag und Bekanntmachung des Hinweises auf die Entscheidung über den Einspruch: **14.03.2018**
(45) Hinweis auf die Patenterteilung: 20.11.2013
(21) Anmeldenummer: 06114341.8
(22) Anmeldetag: 22.05.2006
(51) Int. Cl.: B29C 67/00

(54) **Verwendung von cyclischen Oligomeren in einem formgebenden Verfahren und Formkörper, hergestellt nach diesem Verfahren**
Use of cyclic oligomers in a forming process and object produced by this process
Utilisation d'oligomères cycliques dans un procédé de formage et objet obtenu par ce procédé

(30) Priorität: 16.07.2005 DE 102005033379
(43) Veröffentlichungstag der Anmeldung: 17.01.2007
(73) Patentinhaber: Evonik Degussa GmbH, 45128 Essen (DE)
(72) Erfinder: Monsheimer, Sylvia, 45721 Haltern am See (DE); Richter, Alexander, 45739 Oer-Erkenschwick (DE)

(56) Entgegenhaltungen:
- EP-A- 1 388 411
- EP-A- 1 674 497
- EP-A1- 1 111 012
- EP-B1- 1 660 566
- EP-B1- 1 896 247
- WO-A-2005/090056
- WO-A-2005/105412
- WO-A1-2005/097475
- WO-A1-2006/018500
- WO-A2-2006/051222
- US-A- 4 944 817
- US-A- 6 136 948
- US-A1- 2002 113 331
- US-A1- 2004 104 499
- US-A1- 2004 137 228
- US-A1- 2004 232 583
- US-B1- 6 245 281
- US-B2- 6 875 838
- KOHAN M.I: 'Nylon Plastics Handbook', HANSER VERLAG Seiten 75 - PAR.4.2.2

## Beschreibung

Die zügige Bereitstellung von Prototypen ist eine in der jüngsten Zeit häufig gestellte Aufgabe. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da das die aufgeschmolzenen Bereiche umgebende Pulverbett ausreichende Stützwirkung bietet. Ebenso entfällt die Nacharbeit, Stützen zu entfernen. Die Verfahren sind auch für die Herstellung von Kleinserien geeignet.

Die Erfindung betrifft ein formgebendes Verfahren gemäß Anspruch 1 unter Verwendung von Pulver, welches im wesentlichen aus cyclischen Oligomeren besteht, sowie Formkörper (nicht beansprucht), hergestellt durch ein schichtweise arbeitendes Verfahren, mit welchem selektiv Bereiche einer Pulverschicht aufgeschmolzen werden, unter Verwendung dieses Pulvers. Nach Abkühlen und Verfestigen der zuvor Schicht für Schicht aufgeschmolzenen Bereiche kann der Formkörper dem Pulverbett entnommen werden.

Die Selektivität der schichtweise arbeitenden Verfahren kann dabei beispielsweise über den Auftrag von Suszeptoren, Absorbern, Inhibitoren oder durch Masken oder über fokussierte Energieeinbringung, wie beispielsweise durch einen Laserstrahl, oder über Glasfasern erfolgen. Der Energieeintrag wird über elektromagnetische Strahlung erreicht.

Im Folgenden werden einige erfindungsgemäße Verfahren beschrieben, mit denen aus dem Pulver, welches cyclische Oligomere aufweist, erfindungsgemäße Formteile hergestellt werden können, ohne dass die Erfindung darauf beschränkt werden soll. Der Anteil an cyclischen Oligomeren in für das erfindungsgemäße Verfahren verwendete Pulver beträgt mindestens 50 % (Gewichtsprozent) bezogen auf die Gesamtmenge Pulver.

Ein Verfahren, welches besonders gut für den Zweck des Rapid Prototypings und Rapid Manufacturings geeignet ist, ist das selektive Laser-Sintern. Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren schnell wieder zu einer festen Masse. Durch wiederholtes Belichten von immer neu aufgebrachten Schichten können mit diesem Verfahren dreidimensionale Körper einfach und schnell hergestellt werden.

Das Verfahren des Laser-Sinterns (Rapid Prototyping) zur Darstellung von Formkörpern aus pulverförmigen Polymeren wird ausführlich in der Patentschriften US 6 136 948 und WO 96/06881 (beide DTM Corporation) beschrieben. Eine Vielzahl von Polymeren und Copolymeren wird für diese Anwendung beansprucht, wie z. B. Polyacetat, Polypropylen, Polyethylen, lonomere und Polyamid.

Andere gut geeignete Verfahren sind das SIV-Verfahren, wie in WO 01/38061 beschrieben, oder ein Verfahren wie in EP 1 015 214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in EP 1 459 871 beschrieben. Bei diesem wird die zum Verschmelzen benötigte Energie durch einen Mikrowellengenerator eingebracht, und die Selektivität wird durch Auftragen eines Suszeptors erreicht.

Weitere geeignete Verfahren sind solche, die mit einem Absorber arbeiten, der entweder im Pulver enthalten ist, oder der per Inkjet-Verfahren aufgetragen wird wie in DE 10 2004 012 682.8, DE 10 2004 012 683.6 und DE 10 2004 020 452.7 beschrieben.

Für die genannten Rapid-Prototyping- bzw. Rapid-Manufacturing-Verfahren (RP- oder RM-Verfahren) können pulverförmige Substrate, insbesondere Polymere, vorzugsweise ausgewählt aus Polyester, Polyvinylchlorid, Polyacetal, Polypropylen, vorzugsweise ausgewählt aus Polyester, Polyvinylchlorid, Polyacetal, Polypropylen, Polyethylen, Polystyrol, Polycarbonat, Poly-(N-methylmethacrylimide) (PMMI), Polymethylmethacrylat (PMMA), lonomer, Polyamid, oder Gemische davon eingesetzt werden.

In US 6,110,411 werden speziell für das Lasersintern Pulver von Blockcopolymeren beschrieben, die aus einem Hart- und einem Weichsegment bestehen, wobei der Hartblock einen Polyamidbaustein enthalten kann, der Weichblock jedoch aus einer anderen Komponente besteht, nämlich aus Ether- und Estereinheiten.

In WO 95/11006 wird ein für das Lasersintern geeignetes Polymerpulver beschrieben, das bei der Bestimmung des Schmelzverhaltens durch Differential Scanning Calorimetry bei einer Scanning rate von 10 bis 20 °C/min keine Überlappung des Schmelze- und Rekristallisationspeaks zeigt, einen ebenfalls durch DSC bestimmten Kristallinitätsgrad von 10 bis 90 % aufweist, ein zahlenmäßiges Mittel des Molekulargewichts Mn von 30 000 bis 500 000 hat und dessen Quotient Mw/Mn im Bereich von 1 bis 5 liegt.

DE 197 47 309 beschreibt die Verwendung eines Polyamid-12-Pulvers mit erhöhter Schmelztemperatur und erhöhter Schmelzenthalpie, welches durch Umfällung eines zuvor durch Ringöffnung und anschließende Polykondensation von Laurinlactam hergestellten Polyamids erhalten wird. Es handelt sich dabei um ein Polyamid 12.

Die Herstellung von cyclischen Polyester-Oligomeren ist in EP 0 699 701 A2 beschrieben. Ein Beschichtungspulver, welches cyclische Oligomere aufweist, ist in EP 1 111 012 A1 beschrieben. Vorteilhaft an den mit diesem Pulver im Wirbelsinterverfahren oder Elektrosprühverfahren beschichteten Metallstrukturen sind die Härte und die Schlagzähigkeit der Beschichtung. Das Oligomer kann ein Polyester, Polycarbonat, Polyamide, Polyimid, oder Polyamidimid sein

Nachteilig an Bauteilen aus einem RP-Verfahren mit Thermoplasten nach dem Stand der Technik ist begrenzte Verwendung bei höheren Temperaturen. Da die derzeit am Markt befindlichen Maschinen für die beispielhaft aufgezählten Verfahren meist nicht über 200 °C beheizbar sind, ist die Auswahl der zur Verfügung stehenden Materialien stark eingegrenzt. Es können nur Thermoplasten mit einer Schmelztemperatur von bis zu 200 °C zuverlässig verwendet werden, in einigen Fällen auch bis 220 °C. Die Beheizung der Maschinen ist notwendig, da bei zu niedriger Bauraumtemperatur die aufgeschmolzenen Bereiche nicht flach in der obersten Schicht liegen bleiben, sondern sich an den Kanten oder auch flächig nach oben verbiegen; es handelt sich um den sogenannten Curl-Effekt. Die nächste Schicht Pulver kann nicht aufgetragen werden, ohne die bereits aufgeschmolzenen Bereiche aus dem Pulverbett herauszureißen. Das schichtweise Erstellen eines Bauteils ist nicht möglich. Der Curl-Effekt kann durch Aufheizen des gesamten Bauraumes auf eine Temperatur knapp unter dem Schmelzpunkt (Kristallitschmelzpunkt bei teilkristallinen Polymeren) beseitigt werden. Daher können zur Zeit nur Polymere mit einem Schmelzpunkt bis zu 200 °C verarbeitet werden. Dementsprechend sind die damit hergestellten Bauteile für Anwendungen oberhalb 120 °C nicht temperaturstabil genug.

Besonders bei einem Einsatz im Automobilbereich müssen Bauteile auch bei Temperaturen oberhalb von 120 °C noch ausreichende Festigkeit aufweisen, um ihre Funktion zu erfüllen.

Aufgabe der vorliegenden Erfindung war es deshalb, ein Verfahren zu entwickeln, welches die Erzeugung von höher temperaturfesten Formkörpern mit möglichst gut reproduzierbarem Verarbeitungsverfahren auf den im Markt befindlichen Maschinen bzw. auf RP/RM-Maschinen mit begrenzter Vorheizung, beispielsweise maximal 200 °C, ermöglicht. Das Verarbeitungsverfahren ist dabei ein schichtweise arbeitendes Verfahren, bei dem selektiv Bereiche der jeweiligen Pulverschicht mittels elektromagnetischer Energie aufgeschmolzen werden und sich nach dem Abkühlen zu dem gewünschten Formkörper verbunden haben.

Überraschenderweise wurde nun gefunden, wie in den Ansprüchen beschrieben, dass sich durch formgebende Verfahren unter Verwendung von Pulver, welches im wesentlichen aus cyclischen Oligomeren besteht, Bauteile herstellen lassen, die eine gegenüber dem Stand der Technik verbesserte Temperaturbeständigkeit zeigen. Der Anteil an cyclischen Oligomeren in für das erfindungsgemäße Verfahren verwendete Pulver beträgt mindestens 50 % (Gewichtsprozent) bezogen auf die Gesamtmenge an Pulver.

Ein weiterer Vorteil ist die Verringerung der Anzahl der Lunker in den Bauteilen, bedingt durch die niedrige Viskosität des aufgeschmolzenen Pulvers. Dazu ist es vorteilhaft, mindestens 60 % Anteil cyclischer Oligomere bezogen auf die Gesamtmenge Pulver zu haben, und bevorzugt mehr als 70 %. Die mechanischen Eigenschaften orientieren sich dabei an den Eigenschaften eines entsprechenden spritzgegossenen Polymeren, wobei in einigen Eigenschaften wie beispielsweise der Reißdehnung Abstriche gemacht werden müssen. Das ist aber bei Verfahren nach dem Stand der Technik, beispielsweise Lasersintern unter Verwendung von Material nach DE 197 47 309, ebenfalls der Fall. Das formgebende Verfahren ist dadurch gekennzeichnet, dass es sich um ein schichtweise arbeitendes Verfahren, bei welchem selektiv Bereiche der jeweiligen Pulverschicht aufgeschmolzen werden, handelt. Die Selektivität kann dabei durch fokussierte Energieeinbringung wie beispielsweise einen entsprechend geführten Laserstrahl, oder Glasfasern, oder über den Auftrag von Inhibitoren, Suszeptoren, oder Absorbern oder aber durch Masken, erfolgen. Das Verfahren lässt eine automatisierte Bauteilgenerierung ohne Werkzeuge zu. Verwendet wird Pulver, welches cyclische Oligomere aufweist. Dabei können die cyclischen Oligomere auch als Coating auf Partikel mit einem Kern aus völlig anderem Material verstanden werden, beispielsweise Sand, Metall, oder einen Kunststoff. Auch die Verwendung einer Mischung von Partikeln mit cyclischem Oligomer mit anderen Partikeln, beispielsweise aus dem entsprechenden oder einem anderen Polymer oder einem Füllstoff ist erfindungsgemäß. Gegebenenfalls weist das Pulver weitere Zuschlagstoffe, wie z. B. Stabilisatoren, Füllstoffe, Pigmente, Verlaufsmittel und Rieselhilfen, auf.

Gegenstand der vorliegenden Erfindung ist deshalb ein formgebendes Verfahren unter Verwendung von Pulver, welches cyclische Oligomere aufweist, sowie Formkörper, hergestellt durch ein schichtweise arbeitendes Verfahren, mit welchem selektiv Bereiche einer Pulverschicht aufgeschmolzen werden, unter Verwendung dieses Pulvers.

Es kann vorteilhaft sein, den Bauraum der RP/RM-Maschine vorzuheizen. Die optimale Einstellung kann der Fachmann durch entsprechende Versuche leicht herausfinden. Die Schichtdicke beträgt maximal 2 mm, bevorzugt zwischen 0,03 und 1 mm, und besonders bevorzugt zwischen 0,05 und 0,3 mm. Nach oben hin ist die Schichtdicke limitiert durch die gewünschte Auflösung des Bauteils und die Aufnahmecharakteristik der elektromagnetischen Wellen im Material, nach unten hin besteht die Limitierung durch die minimal mögliche Korngröße und einer ausreichenden Rieselfähigkeit des Pulvers.

Typische Werte für die Rieselfähigkeiten des Materials sind Rieselzeiten zwischen 5 und 10 Sekunden. Die Rieselfähigkeit wird nach DIN 53492 ermittelt. Typische Werte für die Schüttdichte liegen zwischen 200 und 700 g/l. Eine genauere Angabe ist kaum möglich, da die Schüttdichte stark von Füllstoffen oder bei einer Beschichtung mit dem cyclischen Oligomer stark von dem Kernmaterial abhängt. Die Schüttdichte wird bestimmt nach DIN 53466.

Dabei weist das verwendete Pulver, welches cyclische Oligomere aufweist, zumindest teilweise einen Schmelzpunkt auf, der unter dem des entsprechenden Polymeren liegt. Bevorzugt liegt dieser Schmelzpunkt unterhalb von 220 °C, besonders bevorzugt unterhalb von 200 °C. Diese Angaben beziehen sich auf das Pulver bzw. bei mehrkomponentigen Pulvern auf Teile des Pulvers. Die mit dem erfindungsgemäßen Verfahren hergestellten Bauteile hingegen weisen einen Schmelzpunkt auf, der deutlich oberhalb des Schmelzpunktes des Ausgangsmaterials bzw. von Teilen davon, liegt. Mit deutlich sei ein Unterschied von mehr als 10 °C gemeint, bevorzugt von mehr als 20 °C, und besonders bevorzugt von mehr als 30 °C.

Die verschiedenen Parameter wurden mittels DSC (Differential Scanning Calorimetry) nach DIN 53765, bzw. nach AN-SAA 0663 bestimmt. Die Messungen wurden mit einem Perkin Elmer DSC 7 mit Stickstoff als Spülgas und einer Aufheizrate sowie Abkühlrate von 20 K/min durchgeführt.

Die BET-Oberfläche liegt bei dem Pulver, welches cyclische Oligomere aufweist, bei weniger als 25 m²/g, bevorzugt weniger als 15 m²/g und besonders bevorzugt weniger als 10 m²/g. Der mittlere Korndurchmesser liegt bevorzugt zwischen 25 und 150 µm, bevorzugt zwischen 30 und 120 µm und besonders bevorzugt zwischen 40 und 100 µm. Die Kornverteilung kann dabei eng, breit oder auch bimodal sein. Das Kornband liegt zwischen 0 und 180 µm, bevorzugt zwischen 0 und 120 µm, und besonders bevorzugt zwischen 0 und 100 µm.

Die BET-Oberfläche wird durch Gasadsorption nach dem Prinzip von Brunauer, Emmet und Teller ermittelt; die herangezogene Norm ist die DIN ISO 9277.

Die Messwerte der Laserbeugung wurden an einem Malvern Mastersizer S, Ver. 2.18 erhalten.

Die Schmelzviskosität am aufgeschmolzenen Pulver liegt deutlich unter der Viskosität an einem aufgeschmolzenen Bauteil, gemessen nach DIN 54811 oder nach ASTM 4440. Die cyclischen Oligomere durchlaufen bei geeigneten Randbedingungen und in Gegenwart eines geeigneten Katalysators eine Ringöffnungsreaktion mit anschließender Kettenverlängerung bis zur Bildung eines Polymeren. Das bei dem erfindungsgemäßen Prozess gebildete hochmolekulare Polymer besitzt weitestgehend die Eigenschaften eines konventionell beispielsweise durch Polykondensation hergestellten Polymers. Die geeigneten Randbedingungen wie beispielsweise Temperatur, Reaktionszeit, Energieeintrag, müssen von dem erfindungsgemäßen Herstellverfahren abgedeckt werden. Die Temperatur wird zum einen über die Vorheizung des Bauraumes, zum anderen über den schichtweise erfolgenden Eintrag elektromagnetischer Energie eingestellt. Zur Verkürzung der Reaktionszeit kann es vorteilhaft sein, bei etwas höherer Bauraumtemperatur zu arbeiten oder die oberste Schicht zweifach zu belichten. Ein mögliche Ausprägung des erfindungsgemäßen Verfahrens ist, dass die Ringöffnungsreaktion und nachfolgende Kettenverlängerung ganz oder teilweise in einem dem dreidimensionalen pulverbasierenden werkzeuglosen Herstellprozess nachgeschalteten Schritt erfolgt.

Der Anteil der cyclischen Oligomere im Bauteil ist deutlich geringer als im Pulver. Der Nachweis kann per HPLC erfolgen.

Außerdem sind in der vorliegenden Anmeldung Formkörper beschrieben, hergestellt durch ein erfindungsgemäßes schichtweise arbeitendes Verfahren, bei welchem selektiv Bereiche der jeweiligen Schicht aufgeschmolzen werden, unter Verwendung von Pulver, welches cyclische Oligomere, und gegebenenfalls weitere Zuschlagstoffe, wie z. B. Stabilisatoren, Füllstoffe, Pigmente, Verlaufsmittel und Rieselhilfen, aufweist. Die Formkörper weisen weitgehend die Eigenschaften von Formkörpern aus einem dem Oligomeren entsprechenden Polymeren auf. Im besonderen sei die Wärmeformbeständigkeit und die Dichte der Bauteile genannt. Überraschenderweise sind besonders hohe Füllgrade , beispielsweise an Glaskugeln, Carbonfasern, Metall- oder Keramikpartikeln, möglich, da die cyclischen Oligomere eine sehr niedrige Viskosität haben. Gerade bei dem erfindungsgemäßen Herstellverfahren, bei welchem die Bauteile drucklos hergestellt werden, zeigt sich hier ein Vorteil.

Das erfindungsgemäße Verfahren hat den Vorteil, dass mit ihm durch ein schichtweise arbeitendes Verfahren, bei dem selektiv Bereiche der jeweiligen Schicht aufgeschmolzen werden, hergestellte Formkörper eine erhöhte Wärmeformbeständigkeit nach ISO 75 und Dichte gegenüber Formkörpern aus herkömmlichen Pulvern, z. B. Polyamidpulvern, haben.

Dabei weist das erfindungsgemäße Verfahren eine vergleichbare Prozesssicherheit auf gegenüber herkömmlichen Verfahren. Die Bedingungen, mit denen ein Optimum an Materialeigenschaften erzeugt wird, kann der Fachmann durch entsprechende Vorversuche leicht herausfinden.

Die aus dem erfindungsgemäßen Pulver hergestellten Formkörper weisen dabei ähnlich gute mechanische Eigenschaften auf wie die aus herkömmlichen Polyamid 12-Pulver hergestellten Formkörper. Gegenüber letzteren weisen sie eine deutlich verbesserte Wärmeformbeständigkeit nach ISO 75 auf. Außerdem sind weniger Lunker im Bauteil enthalten. Die mechanischen Eigenschaften entsprechen in etwa denen eines spritzgegossenen Bauteils aus dem entsprechenden Polymeren.

### Beschreibung der Oligomeren

Die für das erfindungsgemäße Verfahren verwendeten Pulver, die mindestens 50 Gewichtsprozent cyclische Oligomere enthalten, können aus folgenden Materialien, Blends oder Pulvermischungen daraus bestehen:
1.) Pulverförmige Cyclische Oligomere mit mindestens 2 Wiederholungseinheiten im Oligomerenring abgeleitet aus Polyestern oder Copolyestern, sowie bevorzugt ein metallhaltiger Katalysator und besonders bevorzugt ein Zinn oder Titan enthaltender Katalysator.
2.) Pulverförmige Cyclische Oligomere mit mindestens 2 Wiederholungseinheiten im Oligomerenring abgeleitet aus Polyamiden oder Copolyamiden, sowie bevorzugt ein unter Verfahrensbedingungen sauer wirkender Katalysator und besonders bevorzugt eine phosphorhaltige Säure oder ein Salz eines phosphorhaltigen Säure.
3.) Pulverförmige Cyclische Oligomere mit mindestens 2 Wiederholungseinheiten im Oligomerenring abgeleitet aus Polysulfiden, sowie bevorzugt ein unter Verfahrensbedingungen ringöffnender und die Polymerisation beschleunigender Katalysator, besonders bevorzugt einem Katalysator bestehend aus einem Alkalialkoholat.
4.) Pulverförmige Cyclische Oligomere mit mindestens 2 Wiederholungseinheiten im Oligomerenring abgeleitet aus Polyethern, sowie bevorzugt ein unter Verfahrensbedingungen ringöffnender und die Polymerisation beschleunigender Katalysator, besonders bevorzugt einem Katalysator bestehend aus einem Alkalialkoholat.
5.) Pulverförmige Cyclische Oligomere mit mindestens 2 Wiederholungseinheiten im Oligomerenring abgeleitet aus Polyarylenetherketonen, sowie bevorzugt ein unter Verfahrensbedingungen ringöffnender und die Polymerisation beschleunigender Katalysator, besonders bevorzugt einem Katalysator bestehend aus einem Alkalialkoholat.
6.) Pulverförmige Cyclische Oligomere mit mindestens 2 Wiederholungseinheiten im Oligomerenring abgeleitet aus Polycarbonaten, sowie bevorzugt ein unter Verfahrensbedingungen ringöffnender und die Polymerisation beschleunigender Katalysator, besonders bevorzugt einem Katalysator bestehend aus einem Alkalialkoholat.
7.) Pulverförmige Cyclische Oligomere mit mindestens 2 Wiederholungseinheiten im Oligomerenring abgeleitet aus Polyimiden, sowie bevorzugt ein unter Verfahrensbedingungen ringöffnender und die Polymerisation beschleunigender sauer wirkender Katalysator, besonders bevorzugt einem Katalysator bestehend oder abgeleitet aus einer Sulfonsäure.
8.) Pulverförmige Cyclische Oligomere mit mindestens 2 Wiederholungseinheiten im Oligomerenring abgeleitet aus Polyamidimiden, sowie bevorzugt ein unter Verfahrensbedingungen ringöffnender und die Polymerisation beschleunigender sauer wirkender Katalysator, besonders bevorzugt einem Katalysator bestehend oder abgeleitet aus einer Sulfonsäure.
9.) Pulverförmige Cyclische Oligomere mit mindestens 2 Wiederholungseinheiten im Oligomerenring abgeleitet aus Polyetherimiden, sowie bevorzugt ein unter Verfahrensbedingungen ringöffnender und die Polymerisation beschleunigender sauer wirkender Katalysator, besonders bevorzugt einem Katalysator bestehend oder abgeleitet aus einer Sulfonsäure.

Die Grenze für die obere Anzahl an Wiederholungseinheiten kann nicht scharf definiert werden, da wie bei Polymeren auch, die cyclischen Oligomere eine Mischung aus verschiedenen Fraktionen mit unterschiedlichen Molmassen und damit unterschiedlicher Anzahl an Wiederholungseinheiten der gleichen Monomere ist. Da sich die Eigenschaften cyclischer Oligomere mit steigender Anzahl an Wiederholungseinheiten immer mehr den Eigenschaften des eigentlichen Polymers annähern, ist es notwendig, das Gemisch der cyclischen Oligomere so einzustellen, dass die cyclischen Oligomere mit der höchsten Molmasse maximal 50 Wiederholungseinheiten im Ring aufweisen, bevorzugt 20 Wiederholungseinheiten im Ring aufweisen und ganz besonders bevorzugt 10 Wiederholungseinheiten im Ring aufweisen.

Cyclische Oligomere mit 2-4 Wiederholungseinheiten im Ring sind wegen des zum Polymer geringen Schmelzpunktes besonders geeignet.

### Beschreibung Katalysator

Die Aufgabe der Katalysatoren im erfindungsgemäß beschriebenen Pulver ist die Öffnung der Ringe unter vergleichsweise milden Bedingungen zu beschleunigen oder überhaupt erst möglich zu machen, damit sich mehrerer solcher Ringe zu einer linearen oder gering verzweigten Polymerkette zusammenlagern (Molmassenaufbau). Erst wenn die Ringe annähernd vollständig zu linearen oder gering verzweigten Polymerketten umgelagert sind (Molmassenaufbau), erhält das Bauteilmaterial die typischen physikalischen, mechanischen und chemischen Eigenschaften des eigentlichen Polymers. Je nach Aufgabenstellung bzw. Polymertyp müssen verschiedene Katalysatoren ausgewählt werden, die die Ringöffnung und den angeschlossenen Molmassenaufbau fördern. Bekannte Katalysatorensysteme sind z.B. metallorganische Katalysatoren die beispielhaft Zinnatome oder Titanatome als katalytisches Zentrum im Molekül aufweisen und durch verschiedene organische Komplexpartner (Liganden) stabilisiert sind; anorganische Katalysatoren: wie zum Beispiel Metalloxide (beispielhaft feinst verteiltes TiO₂ oder davon abgeleitete basische Titanoxide) oder katalytisch aktive Metalle und Legierungen, Metallsalze (bevorzugt Phosphorhaltige Metallsalze der Alkalimetalle und Erdalkalimetalle, besonders bevorzugt Phosphorhaltige Metallsalze der Alkalimetalle, deren Phosphoratom unterhalb der für Phosphor typischen Oxidationsstufe von 5 liegt); Mineralsäuren (bevorzugt Phosphorhaltige Mineralsäuren, besonders bevorzugt Phosphorhaltige Mineralsäuren deren Phosphoratom unterhalb der für Phosphor typischen Oxidationsstufe von 5 liegt), organische Säuren, anorganische und organische Basen, Lewis-Säuren und Lewis-Basen sowie Katalysatoren, deren Wirksamkeit im Zusammenspiel mit Elektromagnetischen Wellen entwickelt wird. Dabei kann es sich um Katalysatoren handeln, die im Wellenlängenbereich der bei dem erfindungsgemäß beschriebenen formgebenden Verfahren verwendeten elektromagnetischen Strahlung ihre Wirksamkeit entwickeln, oder um Katalysatoren, die bei einem anderen als dem im erfindungsgemäß beschriebenen formgebenden Verfahren verwendeten Wellenlängenbereich ihre Wirkung entwickeln.

Bei der Wahl des Katalysators müssen mehrere grundlegende Aspekte beachtet werden: 1. Zu verarbeitendes Polymer, 2. Polymerisationsverfahren 3. Bauraumtemperatur, 4. Prozessdauer.

Um ein unkontrolliertes Polymerisieren der cyclischen Ringe vor der Belichtung und an den nicht belichteten Stellen im Bauraum zu vermeiden, darf der Katalysator bei Bauraumtemperatur nicht aktiv sein. Bevorzugt wird ein Katalysator verwendet, dessen Katalytische Aktivität erst deutlich oberhalb der Bauraumtemperatur (d.h. erfindungsgemäß mind. 10 °C darüber) verstärkt wird (d.h. mind. Verdopplung der Geschwindigkeitskonstante der Polymerbildung kₚ bei der höheren Temperatur), besonders bevorzugt wird ein Katalysator verwendet, der erst deutlich oberhalb der Bauraumtemperatur (d.h. erfindungsgemäß mind. 10 °C darüber) katalytisch aktiv wird (d.h. mind. Verzehnfachung der Geschwindigkeitskonstante der Polymerbildung kₚ bei der höheren Temperatur). In Abhängigkeit des Polymers muss mit längeren Bauzeiten gerechnet werden, wenn die Ringspaltung und anschließende Kettenbildung im Vergleich zur Belichtungszeit einer Schicht vergleichsweise langsam voranschreitet. In sehr speziellen Fällen muss mehr als einmal belichtet werden.

In Abhängigkeit vom Polymertyp ist es möglich, dass während der Bauphase trotz Verwendung eines Katalysators kaum ein signifikanter Teil der Ringe gespalten und wird und auch kein lineares bzw. teilweise verzweigtes Polymer erzeugt werden kann.

In diesen Fällen kann die Phase des Molmassenaufbaus erst nach der Bauphase stattfinden. Für den nachträglichen Molmassenaufbau werden bevorzugt thermische Verfahren und Verfahren unter Zuhilfenahme von Elektromagnetischer Strahlung eingesetzt, besonders bevorzugt thermische Verfahren unter Zuhilfenahme von Sauerstoff (Röstung) und Verfahren unter Zuhilfenahme von UV-Strahlung unter Verwendung eines Katalysators eingesetzt.

### Mahlen des Materials:

Pulver zur Verwendung im erfindungsgemäßen Verfahren erhält man durch Vermahlen, bevorzugt bei tiefen Temperaturen, besonders bevorzugt unterhalb 0 °C und ganz besonders bevorzugt unterhalb -25 °C, wobei ein Material, welches zumindest ein cyclisches Oligomer aufweist, als Ausgangsmaterial verwendet wird. Zum Vermahlen eignen sich unter anderem Stiftmühlen, Fließbettgegenstrahlmühlen oder Pralltellermühlen.

### Aufbereitung des Pulvers:

Auch eine Nachbehandlung in einem Mischer mit starker Scherung, bevorzugt bei Temperaturen oberhalb des Glaspunktes des Polymeren, kann angeschlossen werden, um das Korn abzurunden und damit die Rieselfähigkeit zu verbessern. Auch eine Fraktionierung, beispielsweise durch Sieben oder Sichten, kann die Pulvereigenschaften verbessern. Eine Ausrüstung mit Rieselhilfen nach dem Stand der Technik kann ebenfalls angeschlossen werden. Überraschenderweise lässt sich mit diesen Maßnahmen ein gut verarbeitbares Pulver erzeugen, was eine sichere und kommerziell nutzbare Verarbeitung mit einem erfindungsgemäßen Verfahren ermöglicht.

Kommerziell erhältliche Produkte sind die Vorprodukte für Polybutylenterephthalat der Cyclics Europe GmbH, Deutschland, beispielsweise CBT 100, oder CBT 200.

Im erfindungsgemäßen Verfahren verwendetes Pulver kann außerdem Hilfsstoffe und/oder Füllstoffe und/oder weitere organische oder anorganische Pigmente aufweisen. Solche Hilfsstoffe können z. B. Rieselhilfsmittel, wie z. B. gefällte und/oder pyrogene Kieselsäuren, sein. Gefällte Kieselsäuren werden zum Beispiel unter dem Produktnamen Aerosil, mit unterschiedlichen Spezifikationen, durch die Degussa AG angeboten. Vorzugsweise weist das Pulver weniger als 3 Gew.-%, vorzugsweise von 0,001 bis 2 Gew.-% und ganz besonders bevorzugt von 0,05 bis 1 Gew.-% solcher Hilfsstoffe, bezogen auf die Summe der vorhandenen Polymere, auf. Die Füllstoffe können z. B. Glas-, Metall- oder Keramikpartikel, wie z. B. Glaskugeln, Stahlkugeln oder Metallgrieß, oder Fremdpigmente, wie z. B. Übergangsmetalloxide, sein. Die Pigmente können beispielsweise Titandioxidpartikel basierend auf Rutil (bevorzugt) oder Anatas sein oder Rußpartikel.

Die Füllstoffpartikel weisen dabei vorzugsweise eine kleinere oder ungefähr gleich große mittlere Partikelgröße wie die cyclische Oligomer aufweisenden Partikel auf. Vorzugsweise sollte die mittlere Partikelgröße d₅₀ der Füllstoffe die mittlere Partikelgröße d₅₀ der cyclische Oligomere aufweisenden Partikel um nicht mehr als 20 %, vorzugsweise um nicht mehr als 15 % und ganz besonders bevorzugt um nicht mehr als 5 % überschreiten. Die Partikelgröße ist insbesondere limitiert durch die zulässige Bauhöhe bzw. Schichtdicke in der Rapid-Prototyping/Rapid Manufacturing-Anlage.

Vorzugsweise weist das im erfindungsgemäßen Verfahren verwendete Polymerpulver weniger als 75 Gew.-%, bevorzugt von 0,001 bis 70 Gew.-%, besonders bevorzugt von 0,05 bis 50 Gew.-% und ganz besonders bevorzugt von 0,5 bis 25 Gew.-% solcher Füllstoffe, bezogen auf die Summe der vorhandenen cyclischen Oligomere bzw. Polymere, auf.

Beim Überschreiten der angegebenen Höchstgrenzen für Hilfs- und/oder Füllstoffe kann es je nach eingesetztem Füll- oder Hilfsstoff zu deutlichen Verschlechterungen der mechanischen Eigenschaften von Formkörpern kommen, die mittels solcher Pulver hergestellt wurden.

Es ist ebenso möglich, herkömmliche Polymerpulver mit Pulvern, welche cyclisches Oligomer aufweisen, zu mischen und in einem erfindungsgemäßen Verfahren zu verwenden. Auf diese Weise lassen sich Polymerpulver mit verbesserter Verarbeitungsfähigkeit in einer RP/RM-Anlage herstellen. Das Verfahren zur Herstellung solcher Mischungen kann z. B. DE 34 41 708 entnommen werden.

Zur Verbesserung der Verarbeitungsfähigkeit oder zur weiteren Modifikation des Pulvers können diesem anorganische Fremdpigmente, wie z. B. Übergangsmetalloxide, Stabilisatoren, wie z. B. Phenole, insbesondere sterisch gehinderte Phenole, Verlaufs- und Rieselhilfsmittel, wie z. B. pyrogene Kieselsäuren, sowie Füllstoffpartikel zugegeben werden. Vorzugsweise wird, bezogen auf das Gesamtgewicht an Polymeren bzw. Oligomeren im Pulver, so viel dieser Stoffe zugegeben, dass die für das im erfindungsgemäßen Verfahren zu verwendende Pulver angegeben Konzentrationen für Füll- und/oder Hilfsstoffe eingehalten werden.

Gegenstand der vorliegenden Erfindung sind auch Verfahren zur Herstellung von Formkörpern durch schichtweise arbeitende Verfahren, bei denen selektiv Bereiche der jeweiligen Schicht aufgeschmolzen werden, unter Verwendung von Pulver, die dadurch gekennzeichnet sind, dass sie im wesentlichen aus cyclischem Oligomeren bestehen.

Die Energie wird durch elektromagnetische Strahlung eingebracht, und die Selektivität wird beispielsweise durch Masken, Auftragung von Inhibitoren, Absorbern, Suszeptoren oder aber durch eine Fokussierung der Strahlung, beispielsweise durch Laser, eingebracht. Die elektromagnetische Strahlung umfasst den Bereich von 100 nm bis 10 cm, bevorzugt zwischen 400 nm bis 10 600 nm und besonders bevorzugt 10600 nm (CO2-Laser) oder 800 bis 1 060 nm (Diodenlaser, Nd:YAG-Laser, oder entsprechende Lampen und Strahler). Die Quelle der Strahlung kann beispielsweise ein Mikrowellengenerator, ein geeigneter Laser, ein Heizstrahler oder eine Lampe sein, aber auch Kombinationen davon. Nach dem Abkühlen aller Schichten kann der erfindungsgemäße Formkörper entnommen werden. Es kann vorteilhaft sein, den Bauraum der Maschine zu temperieren. Die optimalen Verarbeitungsbedingungen für das verwendete Pulver kann der Fachmann leicht durch geeignete Vorversuche herausfinden. Vorheiztemperatur und eingebrachte Energiemenge, -einwirkdauer und Wellenlänge der elektromagnetischen Energie sind sorgfältig auf das cyclische Oligomer und den verwendeten Katalysator abzustimmen.

Die nachfolgenden Beispiele für solche Verfahren dienen der Erläuterung, ohne die Erfindung darauf beschränken zu wollen.

Die Lasersinterverfahren sind hinlänglich bekannt und beruhen auf dem selektiven Sintern von Polymerpartikeln, wobei Schichten von Polymerpartikeln kurz einem Laserlicht ausgesetzt werden und so die Polymerpartikel, die dem Laserlicht ausgesetzt waren, miteinander verbunden werden. Durch die aufeinander folgende Versinterung von Schichten von Polymerpartikeln werden dreidimensionale Objekte hergestellt. Einzelheiten zum Verfahren des selektiven Laser-Sinterns sind z. B. den Schriften US 6 136 948 und WO 96/06881 zu entnehmen.

Das erfindungsgemäße schichtweise pulverbasierende dreidimensionale Verfahren, bei welchem ein Pulver, welches cyclische Oligomere aufweist, verwendet wird, kann zur Erzeugung von Bauteilen verwendet werden, bei dem von Schicht zu Schicht oder auch innerhalb einer Schicht unterschiedliche Bauteileigenschaften eingestellt werden. Durch die Verarbeitungsparameter (Dauer der Einwirkung der elektromagnetischen Strahlung, Intensität, und andere) können die Bauteileigenschaften in einem weiten Bereich eingestellt werden. Beispielsweise kann auf diese Art und Weise ein Formkörper entstehen, der harte und weiche Bereiche aufweist.

Andere gut geeignete Verfahren sind das SIV-Verfahren, wie es in WO 01/38061 beschrieben wird, oder ein Verfahren wie in EP 1 015 214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 103 11 438 beschrieben. Bei diesem wird die zum Verschmelzen benötigte Energie durch einen Mikrowellengenerator eingebracht, und die Selektivität wird durch Auftragen eines Suszeptors erreicht.

Weitere geeignete Verfahren sind solche, die mit einem Absorber arbeiten, der entweder im Pulver enthalten ist, oder der per Inkjet-Verfahren aufgetragen wird wie in DE 10 2004 012 682.8, DE 10 2004 012 683.6 und DE 10 2004 020 452.7 beschrieben.

Um optimale Ergebnisse zu erhalten, müssen das Pulver und das Verfahren aufeinander abgestimmt werden. So kann es für Pulverauftragssysteme, die sich der Schwerkraft bedienen, von Vorteil sein, die Rieselfähigkeit des Pulvers mit geeigneten Maßnahmen nach dem Stand der Technik zu erhöhen. Eine Vorheizung der Baukammer, oder auch des Pulvers kann positiv für die Verarbeitbarkeit und die Bauteilqualität sein. Gute Ergebnisse wurden auch damit erzielt, dass die ersten Schichten eines Bauteils mit anderem, meist höherem, Energieeintrag behandelt wurden als die nachfolgenden. Die Einstellungsmöglichkeiten beispielsweise bezüglich Leistung, Einwirkdauer, Geschwindigkeit der elektromagnetischen Strahlung sind vielfältig und werden hier nicht vollständig aufgeführt; sie können aber von dem Fachmann in Vorversuchen einfach ermittelt werden.

Die Formkörper, die durch ein schichtweise arbeitendes Verfahren, bei dem selektiv Bereiche aufgeschmolzen werden, hergestellt werden, zeichnen sich dadurch aus, dass sie Pulver verwenden, welche zumindest ein cyclisches Oligomer aufweisen.

Die Formkörper können außerdem Füllstoffe und/oder Hilfsstoffe (hier gelten die Angaben wie für das Pulver), wie z. B. thermische Stabilisatoren, wie z. B. sterisch gehinderte Phenolderivate, aufweisen. Füllstoffe können z. B. Glas-, Keramikpartikel und auch Metallpartikel, wie zum Beispiel Eisenkugeln, bzw. entsprechende Hohlkugeln sein. Bevorzugt weisen die erfindungsgemäßen Formkörper Glaspartikel, ganz besonders bevorzugt Glaskugeln, auch Mikrohohlglaskugeln, auf. Weitere bevorzugte Ausführungen sind mit Aluminiumpulver- oder -flakes, oder mit Kohlenstoff bzw. Kohlefasern, auch gemahlen oder Keramikpartikel. Vorzugsweise weisen erfindungsgemäße Formkörper weniger als 3 Gew.-%, besonders bevorzugt von 0,001 bis 2 Gew.-% und ganz besonders bevorzugt von 0,05 bis 1 Gew.-% solcher Hilfsstoffe, bezogen auf die Summe der vorhandenen Polymere, auf. Ebenso bevorzugt weisen erfindungsgemäße Formkörper weniger als 75 Gew.-%, bevorzugt von 0,001 bis 70 Gew.-%, besonders bevorzugt von 0,05 bis 50 Gew.% und ganz besonders bevorzugt von 0,5 bis 25 Gew.-% solcher Füllstoffe, bezogen auf die Summe der vorhandenen Polymere, auf.

Die Wärmeformbeständigkeit nach ISO 75 der erfindungsgemäßen Bauteile liegt nahe der Wärmeformbeständigkeit von Bauteilen aus dem Polymer, welches dem cyclischen Oligomeren entspricht. Dabei sind die Bauteile mit einem geeigneten Herstellverfahren hergestellt worden, bevorzugt mittels Spritzguß. Die Abweichung beträgt weniger als 40 %, bevorzugt weniger als 25 % und besonders bevorzugt weniger als 10 %.

Die Dichte der erfindungsgemäßen Bauteile liegt ebenfalls nahe an der Dichte von spritzgegossenen oder mit einem anderen geeigneten Herstellverfahren erstellten Bauteilen aus dem Polymer, welches dem cyclischen Oligomeren entspricht. Die Abweichung beträgt weniger als 20%, bevorzugt weniger als 10%, und besonders bevorzugt weniger als 8 %.

Vorteile sind ebenfalls bei der Verwendung von Füllstoffen zu finden. Durch die niedrige Viskosität des durch die elektromagnetische Energie aufgeschmolzenen Pulvers werden im Dry Blend dem Pulver hinzugegebene Füllstoffe und andere Partikel hervorragend umflossen. Auch die Verwendung von nanoskaligen Partikeln kann vorteilhaft sein.

Die Viskosität nach DIN 54811 der erfindungsgemäßen Bauteile liegt auch nahe an der Viskosität von Bauteilen aus dem Polymer, welches dem cyclischen Oligomeren entspricht. Dabei sind die Bauteile mit einem geeigneten Herstellverfahren hergestellt worden, bevorzugt mittels Spritzguss. Die Abweichung beträgt weniger als 40%, bevorzugt weniger als 30%, und besonders bevorzugt weniger als 20 %.

Die im nach erfindungsgemäßen Verfahren hergestellten Bauteil nachzuweisenden Oligomere liegen anteilsmäßig ünter dem Anteil an Oligomeren im entsprechenden Pulver, welches im erfindungsgemäßen Verfahren verwendet wird. Der Anteil der im fertigen Bauteil vorliegenden Oligomere oder Cyclooligomere liegt im Bereich von < 10 Gew.-%, bevorzugt von < 1 Gew.-%, besonders bevorzugt von < 0,5 Gew.-%.

Anwendungsgebiete für diese Formkörper sind sowohl im Rapid Prototyping als auch im Rapid Manufacturing zu sehen. Mit letzterem sind durchaus Kleinserien gemeint, also die Herstellung von mehr als einem gleichen Teil, bei dem aber die Produktion mittels eines Spritzgießwerkzeugs nicht wirtschaftlich ist. Beispiele hierfür sind Teile für hochwertige PKW, die nur in kleinen Stückzahlen hergestellt werden, oder Ersatzteile für den Motorsport, bei denen neben den kleinen Stückzahlen auch der Zeitpunkt der Verfügbarkeit eine Rolle spielt. Branchen, in die die erfindungsgemäßen Teile gehen, können die Luft- und Raumfahrtindustrie sein, die Medizintechnik, der Maschinenbau, der Automobilbau, die Sportindustrie, die Haushaltswarenindustrie, Elektroindustrie und Lifestyle.

Die folgenden Beispiele sollen das erfindungsgemäße Verfahren beschreiben, ohne die Erfindung auf die Beispiele einzuschränken.

## Patentansprüche

1. Verfahren zur Herstellung von Formkörpern durch ein schichtweise arbeitendes Verfahren, bei dem selektiv Bereiche der jeweiligen Pulverschicht durch den Eintrag elektromagnetischer Energie aufgeschmolzen werden, wobei die Selektivität durch die Auftragung von Suszeptoren, Inhibitoren, Absorbern oder durch Masken oder durch Fokussierung eines Laserstrahls erzielt wird,
**dadurch gekennzeichnet,**
**dass** Pulver, welches zu mindestens 50 Gewichtsprozent aus cyclischen Oligomeren besteht, verwendet wird.

2. Verfahren nach Anspruch 1,
**dadurch gekennzeichnet,**
**dass** Pulver, welches zu mindestens 60 Gewichtsprozent aus cyclischen Oligomeren besteht, verwendet wird.

3. Verfahren nach Anspruch 1,
**dadurch gekennzeichnet,**
**dass** Pulver, welches zu mindestens 70 Gewichtsprozent aus cyclischen Oligomeren besteht, verwendet wird.

4. Verfahren nach Anspruch 1,
**dadurch gekennzeichnet,**
**dass** Pulver, welches aus cyclischen Oligomeren und zusätzlich einem Füllstoff mit höherer Dichte als das Oligomer besteht, verwendet wird.

5. Verfahren nach Anspruch 1,
**dadurch gekennzeichnet,**
**dass** Pulver, welches aus cyclischen Oligomeren als Schale und einem Kern aus Material mit höherer Dichte als das Oligomer besteht, verwendet wird

6. Verfahren nach Anspruch 1,
**dadurch gekennzeichnet,**
**dass** Pulver, welches aus cyclischen Oligomeren sowie einem geeigneten Katalysator besteht, verwendet wird.

7. Verfahren nach Anspruch 1,
**dadurch gekennzeichnet,**
**dass** Pulver, welches aus cyclischen Oligomeren sowie einem geeigneten Katalysator und weiteren Zuschlagstoffen aus der Gruppe der Füllstoffe, Pigmente, Verlaufsmittel, Rieselhilfen, Stabilisatoren besteht, verwendet wird.

8. Verfahren nach Anspruch 1,
**dadurch gekennzeichnet,**
**dass** Pulver, welches aus cyclischen Oligomeren sowie einem Füllstoff aus der Gruppe Glaskugeln, Mikrohohlglaskugeln, Aluflakes oder -grieß, Keramikpartikel, Carbonfasern, Metallgrieß oder -flakes besteht, verwendet wird.

9. Verfahren nach einem der vorhergehenden Ansprüche,
**dadurch gekennzeichnet,**
**dass** der Bauraum der RP/RM-Maschine auf eine Temperatur zwischen Raumtemperatur und der Schmelztemperatur des Oligomerpulvers vorgeheizt wird.

10. Verfahren nach einem der vorhergehenden Ansprüche,
**dadurch gekennzeichnet,**
**dass** die RP/RM-Maschine mit Schichtdicken zwischen 0,03 und 1 mm arbeitet.

11. Verfahren nach einem der vorhergehenden Ansprüche,
**dadurch gekennzeichnet,**
**dass** die RP/RM-Maschine mit Schichtdicken zwischen 0,05 und 0,3 mm arbeitet.

12. Verfahren nach einem der Ansprüche 1 bis 8,
**dadurch gekennzeichnet,**
**dass** Pulver, weiches eine Schüttdichte zwischen 200 und 700 g/l nach DIN 53466 aufweist, verwendet wird.

13. Verfahren nach einem der Ansprüche 1 bis 8,
**dadurch gekennzeichnet,**
**dass** Pulver, welches eine BET-Oberfläche nach DIN ISO 9277 von weniger als 25 m²/g aufweist, verwendet wird.

14. Verfahren nach einem der Ansprüche 1 bis 8,
**dadurch gekennzeichnet,**
**dass** Pulver, welches eine BET-Oberfläche nach DIN ISO 9277 von weniger als 15 m²/g aufweist, verwendet wird.

15. Verfahren nach einem der Ansprüche 1 bis 8,
**dadurch gekennzeichnet,**
**dass** Pulver, welches eine BET-Oberfläche nach DIN ISO 9277 von weniger als 10 m²/g aufweist, verwendet wird.

16. Verfahren nach einem der Ansprüche 1 bis 8,
**dadurch gekennzeichnet,**
**dass** Pulver, welches einen mittleren Korndurcmesser (Laserbeugung) zwischen 25 und 150 µm aufweist, verwendet wird.

17. Verfahren nach einem der Ansprüche 1 bis 8,
**dadurch gekennzeichnet,**
**dass** Pulver, welches einen mittleren Korndurcmesser (Laserbeugung) zwischen 40 und 100 µm aufweist, verwendet wird.

18. Verfahren nach einem der Ansprüche 1 bis 8,
**dadurch gekennzeichnet,**
**dass** Pulver, welches cyclische Oligomere aus mindestens zwei Wiederholungseinheiten im Oligomerenring abgeleitet aus Polyestern oder Copolyestern aufweist, verwendet wird.

19. Verfahren nach einem der Ansprüche 1 bis 8,
**dadurch gekennzeichnet,**
**dass** Pulver, welches cyclische Oligomere aus mindestens zwei Wiederholungseinheiten im Oligomerenring abgeleitet aus Polyestern oder Copolyestern sowie einen metallhaltigen Katalysator aufweist, verwendet wird.

20. Verfahren nach einem der Ansprüche 1 bis 8,
**dadurch gekennzeichnet,**
**dass** Pulver, welches cyclische Oligomere aus mindestens zwei Wiederholungseinheiten im Oligomerenring abgeleitet aus Polyestern oder Copolyestern sowie einen Zinn oder Titan enthaltenden Katalysator aufweist, verwendet wird.

21. Verfahren nach einem der Ansprüche 1 bis 8,
**dadurch gekennzeichnet,**
**dass** Pulver, welches cyclische Oligomere aus mindestens zwei Wiederholungseinheiten im Oligomerenring abgeleitet aus Polyamiden oder Copolyamiden aufweist, verwendet wird.

22. Verfahren nach einem der Ansprüche 1 bis 8,
**dadurch gekennzeichnet,**
**dass** Pulver, welches cyclische Oligomere aus mindestens zwei Wiederholungseinheiten im Oligomerenring abgeleitet aus Polyamiden oder Copolyamiden sowie einen sauer wirkenden Katalysator aufweist, verwendet wird.

23. Verfahren nach einem der Ansprüche 1 bis 8,
**dadurch gekennzeichnet,**
**dass** Pulver, welches cyclische Oligomere aus mindestens zwei Wiederholungseinheiten im Oligomerenring abgeleitet aus Polyamiden oder Copolyamiden sowie eine phosphorhaltige Säure oder das Salz einer phosphorhaltigen Säure aufweist, verwendet wird.

24. Verfahren nach einem der Ansprüche 1 bis 8,
**dadurch gekennzeichnet,**
**dass** Pulver, welches cyclische Oligomere aus mindestens zwei Wiederholungseinheiten im Oligomerenring abgeleitet aus Polysulfiden aufweist, verwendet wird.

25. Verfahren nach einem der Ansprüche 1 bis 8,
**dadurch gekennzeichnet,**
**dass** Pulver, welches cyclische Oligomere aus mindestens zwei Wiederholungseinheiten im Oligomerenring abgeleitet aus Polysulfiden sowie ein Alkalialkoholat aufweist, verwendet wird.

26. Verfahren nach einem der Ansprüche 1 bis 8,
**dadurch gekennzeichnet,**
**dass** Pulver, welches cyclische Oligomere aus mindestens zwei Wiederholungseinheiten im Oligomerenring abgeleitet aus Polyethern aufweist, verwendet wird.

27. Verfahren nach einem der Ansprüche 1 bis 8,
**dadurch gekennzeichnet,**
**dass** Pulver, welches cyclische Oligomere aus mindestens zwei Wiederholungseinheiten im Oligomerenring abgeleitet aus Polyethern sowie ein Alkalialkoholat aufweist, verwendet wird.

28. Verfahren nach einem der Ansprüche 1 bis 8,
**dadurch gekennzeichnet,**
**dass** Pulver, welches cyclische Oligomere aus mindestens zwei Wiederholungseinheiten im Oligomerenring abgeleitet aus Polyarylenetherketon aufweist, verwendet wird.

29. Verfahren nach einem der Ansprüche 1 bis 8,
**dadurch gekennzeichnet,**
**dass** Pulver, welches cyclische Oligomere aus mindestens zwei Wiederholungseinheiten im Oligomerenring abgeleitet aus Polyarylenetherketon sowie ein Alkalialkoholat aufweist, verwendet wird.

30. Verfahren nach einem der Ansprüche 1 bis 8,
**dadurch gekennzeichnet,**
**dass** Pulver, welches cyclische Oligomere aus mindestens zwei Wiederholungseinheiten im Oligomerenring abgeleitet aus Polycarbonat aufweist, verwendet wird.

31. Verfahren nach einem der Ansprüche 1 bis 8,
**dadurch gekennzeichnet,**
**dass** Pulver, welches cyclische Oligomere aus mindestens zwei Wiederholungseinheiten im Oligomerenring abgeleitet aus Polycarbonat sowie ein Alkalialkoholat aufweist, verwendet wird.

32. Verfahren nach einem der Ansprüche 1 bis 8,
**dadurch gekennzeichnet,**
**dass** Pulver, welches cyclische Oligomere aus mindestens zwei Wiederholungseinheiten im Oligomerenring abgeleitet aus Polyimid aufweist, verwendet wird.

33. Verfahren nach einem der Ansprüche 1 bis 8,
**dadurch gekennzeichnet,**
**dass** Pulver, welches cyclische Oligomere aus mindestens zwei Wiederholungseinheiten im Oligomerenring abgeleitet aus Polyimid sowie ein Katalysator bestehend oder abgeleitet aus einer Sulfonsäure aufweist, verwendet wird.

34. Verfahren nach einem der Ansprüche 1 bis 8,
**dadurch gekennzeichnet,**
**dass** Pulver, welches cyclische Oligomere aus mindestens zwei Wiederholungseinheiten im Oligomerenring abgeleitet aus Polyamidimid aufweist, verwendet wird.

35. Verfahren nach einem der Ansprüche 1 bis 8,
**dadurch gekennzeichnet,**
**dass** Pulver, welches cyclische Oligomere aus mindestens zwei Wiederholungseinheiten im Oligomerenring abgeleitet aus Polyamidimid sowie ein Katalysator bestehend oder abgeleitet aus einer Sulfonsäure aufweist, verwendet wird.

36. Verfahren nach einem der Ansprüche 1 bis 8,
**dadurch gekennzeichnet,**
**dass** Pulver, welches cyclische Oligomere aus mindestens zwei Wiederholungseinheiten im Oligomerenring abgeleitet aus Polyetherimid aufweist, verwendet wird.

37. Verfahren nach einem der Ansprüche 1 bis 8,
**dadurch gekennzeichnet,**
**dass** Pulver, welches cyclische Oligomere aus mindestens zwei Wiederholungseinheiten im Oligomerenring abgeleitet aus Polyetherimid sowie ein Katalysator bestehend oder abgeleitet aus einer Sulfonsäure aufweist, verwendet wird.

38. Verfahren nach einem der Ansprüche 1 bis 8,
**dadurch gekennzeichnet,**
**dass** Pulver, welches aus cyclischen Oligomeren sowie einem geeigneten Katalysator besteht, verwendet wird und dass der Katalysator seine Wirksamkeit im Wellenlängenbereich der bei dem Verfahren verwendetetn elektromagnetischen Strahlung entfaltet.

39. Verfahren nach einem der Ansprüche 1 bis 8,
**dadurch gekennzeichnet,**
**dass** Pulver, welches aus cyclischen Oligomeren sowie einem geeigneten Katalysator besteht, verwendet wird und dass der Katalysator seine Wirksamkeit im Wellenlängenbereich der elektromagnetischen Strahlung eines nachgeschalteten Prozessschrittes entfaltet.

## Claims

1. Process for production of moldings via a layer-by-layer process in which regions of the respective powder layer are selectively melted via input of electromagnetic energy, where selectivity is achieved via application of susceptors, of inhibitors, or of absorbers, or via masks, or via focusing of a laser beam,
**characterized in that**
powder is used which is composed of at least 50 percent by weight of cyclic oligomers.

2. Process according to Claim 1,
**characterized in that**
powder is used which is composed of at least 60 percent by weight of cyclic oligomers.

3. Process according to Claim 1,
**characterized in that**
powder is used which is composed of at least 70 percent by weight of cyclic oligomers.

4. Process according to Claim 1,
**characterized in that**
powder is used which is composed of cyclic oligomers and also of a filler whose density is higher than that of the oligomer.

5. Process according to Claim 1,
**characterized in that**
powder is used which is composed of cyclic oligomers as shell, and of a core composed of material whose density is higher than that of the oligomer.

6. Process according to Claim 1,
**characterized in that**
powder is used which consists of cyclic oligomers, and also of a suitable catalyst.

7. Process according to Claim 1,
**characterized in that**
powder is used which consists of cyclic oligomers, and also of a suitable catalyst, and of other additives from the group of the fillers, pigments, flow agents, powder-flow aids, and stabilizers.

8. Process according to Claim 1,
**characterized in that**
powder is used which consists of cyclic oligomers, and also of a filler from the group of glass beads, hollow glass microbeads, aluminum flakes or granular aluminum, ceramic particles, carbon fibers, granular metal or metal flakes.

9. Process according to any of the preceding claims,
**characterized in that**
the construction chamber of the RP/RM machine is preheated to a temperature between room temperature and the melting point of the oligomer powder.

10. Process according to in any of the preceding claims,
**characterized in that**
the RP/RM machine operates with layer thicknesses between 0.03 and 1 mm.

11. Process according to any of the preceding claims,
**characterized in that**
the RP/RM machine operates with layer thicknesses between 0.05 and 0.3 mm.

12. Process according to any of Claims 1 to 8,
**characterized in that**
powder is used which has a bulk density between 200 and 700 g/l to DIN 53466.

13. Process according to any of Claims 1 to 8,
**characterized in that**
powder is used which has a BET surface area to DIN ISO 9277 of less than 25 m²/g.

14. Process according to any of Claims 1 to 8,
**characterized in that**
powder is used which has a BET surface area to DIN ISO 9277 of less than 15 m²/g.

15. Process according to any of Claims 1 to 8,
**characterized in that**
powder is used which has a BET surface area to DIN ISO 9277 of less than 10 m²/g.

16. Process according to any of Claims 1 to 8,
**characterized in that**
powder is used which has a median grain diameter (laser diffraction) between 25 and 150 µm.

17. Process according to any of Claims 1 to 8,
**characterized in that**
powder is used which has a median grain diameter (laser diffraction) between 40 and 100 µm.

18. Process according to any of Claims 1 to 8,
**characterized in that**
powder is used which comprises cyclic oligomers composed of at least two repeat units in the oligomer ring derived from polyesters or from copolyesters.

19. Process according to any of Claims 1 to 8,
**Characterized in that**
powder is used which comprises cyclic oligomers composed of at least two repeat units in the oligomer ring derived from polyesters or from copolyesters, and also comprises a metal-containing catalyst.

20. Process according to any of Claims 1 to 8,
**characterized in that**
powder is used which comprises cyclic oligomers composed of at least two repeat units in the oligomer ring derived from polyesters or from copolyesters, and also comprises a tin- or titanium-containing catalyst.

21. Process according to any of Claims 1 to 8,
**characterized in that**
powder is used which comprises cyclic oligomers composed of at least two repeat units in the oligomer ring derived from polyamides or from copolyamides.

22. Process according to any of Claims 1 to 8,
**characterized in that**
powder is used which comprises cyclic oligomers composed of at least two repeat units in the oligomer ring derived from polyamides or from copolyamides, and also comprises an acidic catalyst.

23. Process according to any of Claims 1 to 8,
**characterized in that**
powder is used which comprises cyclic oligomers composed of at least two repeat units in the oligomer ring derived from polyamides or from copolyamides, and also comprises a phosphorus-containing acid or comprises the salt of a phosphorus-containing acid.

24. Process according to any of Claims 1 to 8,
**characterized in that**
powder is used which comprises cyclic oligomers composed of at least two repeat units in the oligomer ring derived from polysulfides.

25. Process according to any of Claims 1 to 8,
**characterized in that**
powder is used which comprises cyclic oligomers composed of at least two repeat units in the oligomer ring derived from polysulfides, and also comprises an alkali metal alcoholate.

26. Process according to any of Claims 1 to 8,
**characterized in that**
powder is used which comprises cyclic oligomers composed of at least two repeat units in the oligomer ring derived from polyethers.

27. Process according to any of Claims 1 to 8,
**characterized in that**
powder is used which comprises cyclic oligomers composed of at least two repeat units in the oligomer ring derived from polyethers, and also comprises an alkali metal alcoholate.

28. Process according to any of Claims 1 to 8,
**characterized in that**
powder is used which comprises cyclic oligomers composed of at least two repeat units in the oligomer ring derived from polyarylene ether ketone.

29. Process according to any of Claims 1 to 8,
**characterized in that**
powder is used which comprises cyclic oligomers composed of at least two repeat units in the oligomer ring derived from polyarylene ether ketone, and also comprises an alkali metal alcoholate.

30. Process according to any of Claims 1 to 8,
**characterized in that**
powder is used which comprises cyclic oligomers composed of at least two repeat units in the oligomer ring derived from polycarbonate.

31. Process according to any of Claims 1 to 8,
**characterized in that**
powder is used which comprises cyclic oligomers composed of at least two repeat units in the oligomer ring derived from polycarbonate, and also comprises an alkali metal alcoholate.

32. Process according to any of Claims 1 to 8,
**characterized in that**
powder is used which comprises cyclic oligomers composed of at least two repeat units in the oligomer ring derived from polyimide.

33. Process according to any of Claims 1 to 8,
**characterized in that**
powder is used which comprises cyclic oligomers composed of at least two repeat units in the oligomer ring derived from polyimide, and also comprises a catalyst composed of or derived from a sulfonic acid.

34. Process according to any of Claims 1 to 8,
**characterized in that**
powder is used which comprises cyclic oligomers composed of at least two repeat units in the oligomer ring derived from polyamideimide.

35. Process according to any of Claims 1 to 8,
**characterized in that**
powder is used which comprises cyclic oligomers composed of at least two repeat units in the oligomer ring derived from polyamideimide, and also comprises a catalyst composed of or derived from a sulfonic acid.

36. Process according to any of Claims 1 to 8,
**characterized in that**
powder is used which comprises cyclic oligomers composed of at least two repeat units in the oligomer ring derived from polyetherimide.

37. Process according to any of Claims 1 to 8,
**characterized in that**
powder is used which comprises cyclic oligomers composed of at least two repeat units in the oligomer ring derived from polyetherimide, and also comprises a catalyst composed of or derived from a sulfonic acid.

38. Process according to any of Claims 1 to 8,
**characterized in that**
powder is used which consists of cyclic oligomers, and also of a suitable catalyst, and **in that** the catalyst becomes active in the wavelength range of the electromagnetic radiation used in the process.

39. Process according to any of Claims 1 to 8,
**characterized in that**
powder is used which consists of cyclic oligomers, and also of a suitable catalyst, and **in that** the catalyst becomes active in the wavelength range of the electromagnetic radiation of a downstream processing step.

## Revendications

1. Procédé pour la production de corps moulés, par un procédé fonctionnant par couches, dans lequel des zones de la couche de poudre respective sont sélectivement fondues par l'apport d'énergie électromagnétique, la sélectivité étant réalisée par l'application de suscepteurs, d'inhibiteurs, d'absorbeurs ou au moyen de masques ou par focalisation d'un rayon laser,
**caractérisé en ce**
**qu'**on utilise une poudre qui est constituée à raison d'au moins 50 % en poids d'oligomères cycliques.

2. Procédé selon la revendication 1,
**caractérisé en ce**
**qu'**on utilise une poudre qui est constituée à raison d'au moins 60 % en poids d'oligomères cycliques.

3. Procédé selon la revendication 1,
**caractérisé en ce**
**qu'**on utilise une poudre qui est constituée à raison d'au moins 70 % en poids d'oligomères cycliques.

4. Procédé selon la revendication 1,
**caractérisé en ce**
**qu'**on utilise une poudre qui est constituée d'oligomères cycliques et en outre d'une charge ayant une plus forte densité que l'oligomère.

5. Procédé selon la revendication 1,
**caractérisé en ce**
**qu'**on utilise une poudre qui est constituée d'oligomères cycliques en tant qu'enveloppe et d'un noyau en une matière à plus forte densité que l'oligomère.

6. Procédé selon la revendication 1,
**caractérisé en ce**
**qu'**on utilise une poudre qui est constituée d'oligomères cycliques ainsi que d'un catalyseur approprié.

7. Procédé selon la revendication 1,
**caractérisé en ce**
**qu'**on utilise une poudre qui est constituée d'oligomères cycliques ainsi que d'un catalyseur approprié et d'autres additifs choisis dans le groupe des charges, pigments, agents d'étalement, agents auxiliaires d'écoulement, stabilisants.

8. Procédé selon la revendication 1,
**caractérisé en ce**
**qu'**on utilise une poudre qui est constitue d'oligomères cycliques ainsi que d'une charge choisie dans le groupe des billes de verres, microbilles de verre, paillettes ou poudre d'aluminium, particules céramiques, fibres de carbone, poudre ou paillettes métalliques.

9. Procédé selon l'une quelconque des revendications précédentes,
**caractérisé en ce que**
la chambre de construction de la machine RP/RM est préchauffée à une température comprise entre la température ambiante et la température de fusion de la poudre d'oligomères.

10. Procédé selon l'une quelconque des revendications précédentes,
**caractérisé en ce que**
la machine RP/RM fonctionne avec des épaisseurs de couches comprises entre 0,03 et 1 mm.

11. Procédé selon l'une quelconque des revendications précédentes,
**caractérisé en ce que**
la machine RP/RM fonctionne avec des épaisseurs de couches comprises entre 0,05 et 0,3 mm.

12. Procédé selon l'une quelconque des revendications 1 à 8,
**caractérisé en ce**
**qu'**on utilise une poudre qui présente une densité apparente comprise entre 200 et 700 g/l selon DIN 53466.

13. Procédé selon l'une quelconque des revendications 1 à 8,
**caractérisé en ce**
**qu'**on utilise une poudre qui présente une surface BET selon DIN ISO 9277 de moins de 25 m²/g.

14. Procédé selon l'une quelconque des revendications 1 à 8,
**caractérisé en ce**
**qu'**on utilise une poudre qui présente une surface BET selon DIN ISO 9277 de moins de 15 m²/g.

15. Procédé selon l'une quelconque des revendications 1 à 8,
**caractérisé en ce**
**qu'**on utilise une poudre qui présente une surface BET selon DIN ISO 9277 de moins de 10 m²/g.

16. Procédé selon l'une quelconque des revendications 1 à 8,
**caractérisé en ce**
**qu'**on utilise une poudre qui présente un diamètre moyen de grain (diffraction laser) compris entre 25 et 150 µm.

17. Procédé selon l'une quelconque des revendications 1 à 8,
**caractérisé en ce**
**qu'**on utilise une poudre qui présente un diamètre moyen de grain (diffraction laser) compris entre 40 et 100 µm.

18. Procédé selon l'une quelconque des revendications 1 à 8,
**caractérisé en ce**
**qu'**on utilise une poudre qui comporte des oligomères cycliques à base d'au moins deux motifs répétitifs dans le cycle d'oligomère, dérivés de polyesters ou copolyesters.

19. Procédé selon l'une quelconque des revendications 1 à 8,
**caractérisé en ce**
**qu'**on utilise une poudre qui comporte des oligomères cycliques à base d'au moins deux motifs répétitifs dans le cycle d'oligomère, dérivés de polyesters ou copolyesters, ainsi qu'un catalyseur contenant un métal.

20. Procédé selon l'une quelconque des revendications 1 à 8,
**caractérisé en ce**
**qu'**on utilise une poudre qui comporte des oligomères cycliques à base d'au moins deux motifs répétitifs dans le cycle d'oligomère, dérivés de polyesters ou copolyesters, ainsi qu'un catalyseur contenant de l'étain ou du titane.

21. Procédé selon l'une quelconque des revendications 1 à 8,
**caractérisé en ce**
**qu'**on utilise une poudre qui comporte des oligomères cycliques à base d'au moins deux motifs répétitifs dans le cycle d'oligomère, dérivés de polyamides ou copolyamides.

22. Procédé selon l'une quelconque des revendications 1 à 8,
**caractérisé en ce**
**qu'**on utilise une poudre qui comporte des oligomères cycliques à base d'au moins deux motifs répétitifs dans le cycle d'oligomère, dérivés de polyamides ou copolyamides, ainsi qu'un catalyseur à action acide.

23. Procédé selon l'une quelconque des revendications 1 à 8,
**caractérisé en ce**
**qu'**on utilise une poudre qui comporte des oligomères cycliques à base d'au moins deux motifs répétitifs dans le cycle d'oligomère, dérivés de polyamides ou copolyamides, ainsi qu'un acide phosphoré ou le sel d'un acide phosphoré.

24. Procédé selon l'une quelconque des revendications 1 à 8,
**caractérisé en ce**
**qu'**on utilise une poudre qui comporte des oligomères cycliques à base d'au moins deux motifs répétitifs dans le cycle d'oligomère, dérivés de polysulfures.

25. Procédé selon l'une quelconque des revendications 1 à 8,
**caractérisé en ce**
**qu'**on utilise une poudre qui comporte des oligomères cycliques à base d'au moins deux motifs répétitifs dans le cycle d'oligomère, dérivés de polysulfures, ainsi qu'un alcoolate de métal alcalin.

26. Procédé selon l'une quelconque des revendications 1 à 8,
**caractérisé en ce**
**qu'**on utilise une poudre qui comporte des oligomères cycliques à base d'au moins deux motifs répétitifs dans le cycle d'oligomère, dérivés de polyéthers.

27. Procédé selon l'une quelconque des revendications 1 à 8,
**caractérisé en ce**
**qu'**on utilise une poudre qui comporte des oligomères cycliques à base d'au moins deux motifs répétitifs dans le cycle d'oligomère, dérivés de polyéthers, ainsi qu'un alcoolate de métal alcalin.

28. Procédé selon l'une quelconque des revendications 1 à 8,
**caractérisé en ce**
**qu'**on utilise une poudre qui comporte des oligomères cycliques à base d'au moins deux motifs répétitifs dans le cycle d'oligomère, dérivés de polyarylène-éthercétone.

29. Procédé selon l'une quelconque des revendications 1 à 8,
**caractérisé en ce**
**qu'**on utilise une poudre qui comporte des oligomères cycliques à base d'au moins deux motifs répétitifs dans le cycle d'oligomère, dérivés de polyarylène-éthercétone, ainsi qu'un alcoolate de métal alcalin.

30. Procédé selon l'une quelconque des revendications 1 à 8,
**caractérisé en ce**
**qu'**on utilise une poudre qui comporte des oligomères cycliques à base d'au moins deux motifs répétitifs dans le cycle d'oligomère, dérivés de polycarbonate.

31. Procédé selon l'une quelconque des revendications 1 à 8,
**caractérisé en ce**
**qu'**on utilise une poudre qui comporte des oligomères cycliques à base d'au moins deux motifs répétitifs dans le cycle d'oligomère, dérivés de polycarbonate, ainsi qu'un alcoolate de métal alcalin.

32. Procédé selon l'une quelconque des revendications 1 à 8,
**caractérisé en ce**
**qu'**on utilise une poudre qui comporte des oligomères cycliques à base d'au moins deux motifs répétitifs dans le cycle d'oligomère, dérivés de polyimide.

33. Procédé selon l'une quelconque des revendications 1 à 8,
**caractérisé en ce**
**qu'**on utilise une poudre qui comporte des oligomères cycliques à base d'au moins deux motifs répétitifs dans le cycle d'oligomère, dérivés de polyimide, ainsi qu'un catalyseur constitué ou dérivé d'un acide sulfonique.

34. Procédé selon l'une quelconque des revendications 1 à 8,
**caractérisé en ce**
**qu'**on utilise une poudre qui comporte des oligomères cycliques à base d'au moins deux motifs répétitifs dans le cycle d'oligomère, dérivés de polyamide-imide.

35. Procédé selon l'une quelconque des revendications 1 à 8,
**caractérisé en ce**
**qu'**on utilise une poudre qui comporte des oligomères cycliques à base d'au moins deux motifs répétitifs dans le cycle d'oligomère, dérivés de polyamide-imide, ainsi qu'un catalyseur constitué ou dérivé d'un acide sulfonique.

36. Procédé selon l'une quelconque des revendications 1 à 8,
**caractérisé en ce**
**qu'**on utilise une poudre qui comporte des oligomères cycliques à base d'au moins deux motifs répétitifs dans le cycle d'oligomère, dérivés de polyétherimide.

37. Procédé selon l'une quelconque des revendications 1 à 8,
**caractérisé en ce**
**qu'**on utilise une poudre qui comporte des oligomères cycliques à base d'au moins deux motifs répétitifs dans le cycle d'oligomère, dérivés de polyétherimide, ainsi qu'un catalyseur constitué ou dérivé d'un acide sulfonique.

38. Procédé selon l'une quelconque des revendications 1 à 8,
**caractérisé en ce**
**qu'**on utilise une poudre qui est constituée d'oligomères cycliques ainsi que d'un catalyseur approprié et **en ce que** le catalyseur déploie son activité dans la plage de longueurs d'onde du rayonnement électromagnétique utilisé dans le procédé.

39. Procédé selon l'une quelconque des revendications 1 à 8,
**caractérisé en ce**
**qu'**on utilise une poudre qui est constituée d'oligomères cycliques ainsi que d'un catalyseur approprié et **en ce que** le catalyseur déploie son activité dans la plage de longueurs d'onde du rayonnement électromagnétique d'une étape de processus exécutée en aval.
